# EUROPÄISCHE PATENTSCHRIFT

(11) **EP 3 120 032 B1**
(45) Veröffentlichungstag und Bekanntmachung des Hinweises auf die Patenterteilung: **29.08.2018**
(21) Anmeldenummer: 15704216.9
(22) Anmeldetag: 14.02.2015
(51) Int. Cl.: F16B 13/00, F16B 13/12

(54) **ANKER AUS METALL**
METAL ANCHOR
SYSTÈME D'ANCRAGE EN MÉTAL

(30) Priorität: 17.03.2014 DE 102014103572
(43) Veröffentlichungstag der Anmeldung: 25.01.2017
(73) Patentinhaber: fischerwerke GmbH & Co. KG, 72178 Waldachtal (DE)
(72) Erfinder: KAUPP, Andreas, 72280 Dornstetten (DE)
(86) Internationale Anmeldenummer: PCT/EP2015/000328
(87) Internationale Veröffentlichungsnummer: WO 2015/139805

(56) Entgegenhaltungen:
- EP-A2- 2 613 061
- DE-A1-102007 039 087
- DE-T2- 69 819 226

## Beschreibung

Die Erfindung betrifft einen Anker aus Metall mit den Merkmalen des Oberbegriffs des Anspruchs 1 sowie eine Befestigungsanordnung mit den Merkmalen des Oberbegriffs des Anspruchs 10.

Anker dienen zur Befestigung von Gegenständen an und in Bauwerken. Sie werden in ein zumeist gebohrtes Bohrloch in einem Ankergrund beispielsweise in einer Wand oder einer Decke eingebracht und dort befestigt, was hier als Verankerung bezeichnet wird. Zur Befestigung eines Gegenstands weisen die Anker vielfach ein Außen- oder Innengewinde auf, an dem der Gegenstand anschraubbar ist. Andere Befestigungsmöglichkeiten als Schrauben schließt die Erfindung nicht aus.

Als Anker sind sogenannte Deckennägel mit einem Verankerungsabschnitt mit einem Keilelement bekannt. Durch eine Relativbewegung des Keils zum Deckennagel wird der Verankerungsabschnitt in einem Bohrloch verkeilt bzw. verklemmt, d.h. der Deckennagel im Bohrloch verankert.

Aus der EP 2 613 061 A2 ist eine mit einer Dichtung versehene Verschlusseinrichtung bekannt.

Desweiteren sind hülsenförmige Einschlaganker bekannt, die einen geschlitzten Verankerungsabschnitt aufweisen, der durch Einbringen eines Spreizelements aufgespreitzt wird, wodurch die Anker in einem Bohrloch verankerbar sind. Die Aufzählung von Deckennägeln und Einschlagankern dient der Veranschaulichung und beschränkt die Erfindung nicht auf diese Beispiele von Ankern.

Derartige Anker aus Metall weisen in einem Bohrloch in einem Ankergrund aus Stein oder Beton vor ihrer Verankerung durch beispielsweise Verkeilen oder Aufspreizen einen verhältnismäßig schwachen Halt durch Reibschluss auf. Außerdem ist eine Durchmessertoleranz klein, da Deckennägel und Einschlaganker im Verankerungsabschnitt einen Durchmesser aufweisen, der etwas kleiner ist, als der Durchmesser des Bohrlochs, in dem der Anker verankert wird. Typischerweise weist ein Bohrer für ein Bohrloch einer Befestigungsanordnung mit einem Nenndurchmesser ein geringes Übermaß auf, der Anker dagegen ein geringes Untermaß. So wird für ein Bohrloch mit einem Nenndurchmesser von 8 mm regelmäßig ein Bohrer mit einem Durchmesser von 8,05 mm bis 8,45 mm verwendet, wohingegen Deckennägel und Einschlaganker einen Durchmesser von ungefähr 7,9 mm aufweisen. In einem Bohrloch mit großem Übermaß, also beispielsweise mit einem Durchmesser von 8,45 mm, ist ein Halt eines Ankers aus Metall vor seiner Verankerung durch Aufspreizen, Verkeilen oder dgl. gering oder der Anker weist überhaupt keinen Halt im Bohrloch auf, solange er nicht aufgespreizt, verkeilt oder dgl. d.h. im Bohrloch verankert ist. Bei einer Überkopfmontage kann deswegen ein Anker aus Metall schwerkraftbedingt herausfallen, solange er nicht verankert ist. Eine Überkopfmontage bedeutet ein Einbringen des Ankers in ein senkrecht oder schräg nach oben gerichtetes Bohrloch beispielsweise in einer Decke, einem Unterzug, einer Auskragung, einer Brücke. Das erschwert die Verankerung, weil der Anker bei einer Überkopfmontage im Bohrloch gegen Herausfallen gehalten werden muss bis er durch Aufspreizen, Verkeilen oder dgl. im Bohrloch verankert ist.

Erschwerend zur kleinen Durchmessertoleranz, die ein Anker aus Metall vor seiner Verankerung auszugleichen in der Lage ist, kommt hinzu, dass Bohrlöcher, die in einen typischerweise aus Stein oder Beton bestehenden Ankergrund gebohrt sind aufgrund der normalerweise verwendeten zwei-, drei- oder vierschneidigen Bohrer und aufgrund des Hammerbohrens vergleichsweise große Durchmesser- und Formtoleranzen aufweisen.

Es ist deswegen Aufgabe der Erfindung einen Anker aus Metall vorzuschlagen, der eine große Lochdurchmessertoleranz eines Bohrlochs zulässt und auch bei in einem nach oben gerichteten Bohrloch mit großem Durchmesser bis zu seiner Verankerung durch beispielsweise Aufspreizen, Verkeilen oder dgl. zuverlässig hält.

Diese Aufgabe wird erfindungsgemäß durch einen Anker mit den Merkmalen des Anspruchs 1 sowie eine Befestigungsanordnung mit den Merkmalen des Anspruchs 10 gelöst. Der erfindungsgemäße Anker weist mindestens ein seitlich abstehendes und verformbares Klemmelement auf, das stoffschlüssig mit einem aus Metall bestehenden Grundkörper verbunden ist. "Seitlich" meint hier orthogonal zur Längsachse. "Stoffschlüssig" ist eine Verbindung, wenn die Verbindungspartner durch atomare oder molekulare Kräfte zusammengehalten werden, wie dies beispielsweise beim Löten, Schweißen oder Kleben der Fall ist. "Verbunden" meint, dass Grundkörper und Klemmelement durch einen Verbindungsvorgang verbunden wurden, also nicht einstückig sind. Der Grundkörper weist insbesondere einen Verankerungsabschnitt mit einem Durchmesser auf, der kleiner als der Durchmesser eines Bohrlochs in dem der Anker im Ankergrund verankert wird und insbesondere kleiner als der Nenndurchmesser des Ankers ist. Beispielsweise kann ein Anker mit Nenndurchmesser 8 mm einen Durchmesser im Verankerungsabschnitt von 7,9 mm und das Bohrloch einen Durchmesser von 8,3 mm aufweisen. Insbesondere ist der Anker ein Einschlaganker oder ein Deckennagel mit einem Grundkörper aus Metall, der durch Einbringen eines meist stift-, bolzen oder keilförmigen Spreizelements aufspreizbar und dadurch in einem Bohrloch verankerbar ist. Das Spreizelement kann beispielsweise auch eine Schraube sein, die in den Spreizdübel eingeschraubt wird. Ist das Klemmelement im Bereich des Verankerungsabschnitts angeordnet, so wird es bei der Ermittlung des Durchmessers des Verankerungsabschnitts nicht berücksichtigt. Das Klemmelement kann punkt- oder tropfenförmig sein oder die Form einer Nase, Warze oder Sicke aufweisen. Die Aufzählung ist beispielhaft und nicht abschließend. Das Klemmelement ist elastisch und/oder plastisch verformbar. Beim Einbringen des Ankers in ein Bohrloch im Ankergrund verformt sich das Klemmelement so, dass es gegen eine Lochwand drückt und den Anker auf einer gegenüberliegenden Seite gegen die Lochwand drückt, so dass der Anker reibschlüssig im Bohrloch gehalten ist, auch wenn der Anker nicht durch Aufspreizen, Verkeilen oder dgl. verankert ist. Zwar mögen sich auch sehr feste und harte Materialen in geringem Maße verformen, hier meint der Begriff "verformbar" jedoch, dass im Wesentlichen nicht der Ankergrund nachgibt, insbesondere wenn er aus Beton ist, sondern das Klemmelement. Aufgrund seiner Verformbarkeit passt sich das Klemmelement an einen Spalt zwischen dem Anker und dem Bohrloch an, insbesondere an eine Dicke des Spalts, die von einer Durchmessertoleranz des Bohrlochs abhängt. Bei einer rauen Lochwand besteht zusätzlich ein Formschluss. Beim Einbringen des Ankers in das Bohrloch kann auch ein Teil des Klemmelements abgeschert werden. Ein am Anker verbleibender Teil des Klemmelements hält den Anker durch Reibschluss im Bohrloch. In einem engen Bohrloch kann das Klemmelement auch ganz vom Anker abgeschert werden, in einem derart engen Bohrloch hält der Anker auch ohne das Klemmelement.

Die Erfindung gewährleistet einen Halt eines Ankers aus Metall in einem nach oben gerichteten Bohrloch gegen Herausfallen durch Schwerkraft solange der Anker nicht durch Aufspreizen, Verkeilen oder dgl. im Bohrloch befestigt, d.h. verankert ist. Die Erfindung vereinfacht eine Überkopfmontage des Ankers. Ein Kostenaufwand des Klemmelements ist vernachlässigbar.

Eine Ausgestaltung der Erfindung sieht ein nichtmetallisches Klemmelement vor, insbesondere besteht das Klemmelement aus Kunststoff. Darunter sind auch Klebstoffe und andere aushärtende bzw. abbindende Ein- oder Mehrkomponentenmassen zu verstehen.

Der Anker kann mehrere Klemmelemente aufweisen, die gleich- oder ungleichmäßig über einen Umfang und/oder eine Länge des Ankers verteilt angeordnet sind. Vorzugsweise ist das mindestens eine Klemmelement in Längsrichtung im Wesentlichen mittig am Anker angeordnet, was ein einfaches Anbringen ermöglicht, da die Lagetoleranzen bei einer mittigen Anbringung unerheblich sind. Mit "im Wesentlichen mittig" ist hier die Anordnung des Klemmelements in einem auf die Längsrichtung bezogen mittleren Bereich des Ankers gemeint, wobei sich der mittlere Bereich mittig über ungefähr 40 % der Länge des Ankers, insbesondere über ungefähr 20 % der Länge des Ankers erstreckt. Grundsätzlich genügt es, wenn der Anker ein einziges Klemmelement aufweist, was als einfachste Ausgestaltung der Erfindung angesehen wird.

Das Klemmelement kann gemäß einer Ausgestaltung der Erfindung durch Kleben am Grundkörper angebracht sein. Eine einfache Ausgestaltung der Erfindung sieht vor, dass das Klemmelement selbst aus Klebstoff besteht, der zur Herstellung beispielsweise als Tropfen auf dem Grundkörper aus Metall aufgebracht wird und nach einem Abbinden stoffschlüssig mit dem Grundkörper verbunden ist. Dass das Klemmelement selbst aus Klebstoff besteht bedeutet, dass der Klebstoff am Grundkörper selbst festgeklebt wird, ohne dass dabei ein weiteres Teil mittels des Klebstoffs mit dem Grundkörper verbunden wird. Mit "Klebstoff" ist hier allgemein ein nichtmetallischer Werkstoff gemeint, der Fügeteile durch Flächenhaftung und innere Festigkeit verbinden kann. Die Verwendung eines Klemmelements, das aus Klebstoff besteht, hat den Vorteil, dass das Klemmelement auf einfache Weise am Grundkörper angebracht werden kann. Die Größe des Klemmelements kann durch die Größe des aufgebrachten Klebstofftropfens eingestellt werden.

Vorzugsweise handelt es sich bei dem Klebstoff um einen Schmelzklebstoff, insbesondere um einen Hotmelt mit kurzer Abbindezeit, beispielsweise um Jowat Toptherm 256.00, der zum Auftragen auf den Grundkörper durch Erhitzen aufgeschmolzen und verflüssigt wird und der sich nach dem Auftragen durch Abkühlen wieder verfestigt. Vorteilhaft an der Verwendung eines Schmelzklebstoffs ist, dass diese Art Klebstoff im Regelfall lösemittelfrei ist und dass Schmelzklebstoffe in Produktionsprozessen sehr schnelle Taktzeiten ermöglichen.

Eine Ausgestaltung der Erfindung sieht eine Einschlagtiefenbegrenzung des Ankers vor. Die Einschlagtiefenbegrenzung gibt dem Anker einen Widerhalt in einem Bohrloch beispielsweise bei einem Einschlagen eines Spreizelements in den Anker oder einem Einschlagen eines Keilelements zum Verankern des Ankers in einem Bohrloch durch Verkeilen. Die Einschlagtiefenbegrenzung kann beispielsweise als seitlich überstehender, umlaufender Flansch oder Wulst an einem in Einbringrichtung in ein Bohrloch hinteren Ende des Ankers.

Eine Ausgestaltung der Erfindung sieht ein Gewinde zum Befestigen eines Gegenstands am Anker vor. Das Gewinde kann ein Innen- oder ein Außengewinde sein.

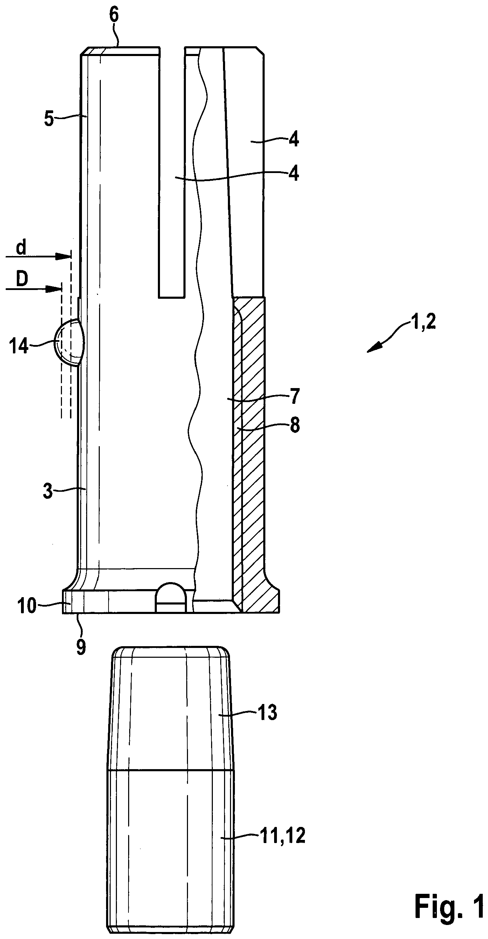

Die Erfindung wird nachfolgend anhand eines in der Zeichnung dargestellten Ausführungsbeispiels näher erläutert. Die einzige Figur zeigt einen erfindungsgemäßen Anker in einer Seitenansicht.

Der in der Zeichnung dargestellte erfindungsgemäße Anker 1 ist ein Einschlaganker 2 mit einer zylindrischen Ankerhülse aus Stahl, also aus Metall, die einen Grundkörper 3 bildet. Durch einander kreuzende Längsschlitze 4 in Axialebenen des Einschlagankers 2, die den Einschlaganker 2 quer durchsetzen, ist ein Verankerungsabschnitt mit Spreizzungen 5 gebildet. Die Längsschlitze 4 und damit auch die Spreizzungen 5 beginnen an einem hier als vorderem bezeichneten Ende 6 des Einschlagankers 2 und erstrecken sich in Längsrichtung über einen vorderen Teil einer Länge des Einschlagankers 2. Im Ausführungsbeispiel erstrecken sich die Längsschlitze 4 und somit der Verankerungsabschnitt über etwas weniger als eine halbe Länge des Einschlagankers 2. Der Durchmesser des Einschlagankers 2 im Bereich der Spreizzungen 5 beträgt 7,9 mm bei einem Nenndurchmesser von 8 mm des Einschlagankers 2.

Der Einschlaganker 2 ist von einem durchgehenden Axialloch 7 durchsetzt, das sich im Bereich der Spreizzungen 5 zum vorderen Ende 6 des Einschlagankers 2 konisch verjüngt und im Übrigen zylindrisch ist. Im zylindrischen Bereich weist das Axialloch 7 ein Innengewinde 8 zur Befestigung eines nicht dargestellten Gegenstands mit einer nicht dargestellten Schraube oder dgl. auf. An einem dem vorderen Ende 6 gegenüberliegenden hinteren Ende 9 weist der Einschlaganker 2 einen umlaufenden und nach außen abstehenden Radialflansch als Einschlagtiefenbegrenzung 10 auf.

Zum Aufspreizen in einem nicht dargestellten Bohrloch weist der Einschlagankers2 ein bolzenförmiges Spreizelement 11 auf, das einen zylindrischen Abschnitt 12 und einen sich konisch verjüngenden Abschnitt 13 aufweist. Das Spreizelement 11 ist ungefähr gleich lang wie die Spreizzungen 5 des Einschlagankers 2. Der zylindrische Bereich 12 des Spreizelements 11 weist den gleichen Durchmesser wie der zylindrische Teil des Axiallochs 7 des Einschlagankers 2 auf. Zum Aufspreizen wird das Spreizelement 12 durch das hintere Ende 9 in das Axialloch 7 des Einschlagankers 2 eingebracht und beispielsweise mit Hammerschlägen zwischen die Spreizzungen 5 eingetrieben, über deren Länge sich das Axialloch 7 konisch verjüngt. Beim Eintreiben zwischen die Spreizzungen 5 drückt das Spreizelement 11 die Spreizzungen 5 auseinander, was als Aufspreizen der Spreizzungen 5 bzw. des Einschlagankers 2 bezeichnet wird. Durch das Aufspreizen lässt sich der Einschlaganker 2 in einem nicht dargestellten Bohrloch in einem Ankergrund befestigen, was als Verankerung bezeichnet wird. Eine zum Befestigen eines nicht dargestellten Gegenstands am Einschlaganker 2 in das Innengewinde 8 eingeschraubte nicht dargestellte Schraube sichert das Spreizelement 11 zwischen den Spreizzungen 5. Zur Verankerung wird der - nicht aufgespreizte - Einschlaganker 2 in ein Bohrloch eingebracht, erforderlichenfalls in ein enges Bohrloch mit Hammerschlägen oder dgl. eingetrieben. Das Bohrloch wird in einen nicht dargestellten Ankergrund aus beispielsweise Stein oder Beton mit einem Durchmesser gebohrt, der etwas größer als der Nenndurchmesser ist, also Übermaß aufweist, beispielsweise 8,3 mm bei einem Nenndurchmesser von 8 mm. Die Einschlagtiefenbegrenzung 10 sitzt an einer Mündung des Bohrlochs auf dem Ankergrund auf und beendet das Einbringen des Einschlagankers 2 in das Bohrloch. Außerdem hält die Einschlagtiefenbegrenzung 10 den Einschlaganker 2 beim Eintreiben des Spreizelements 11 zwischen die Spreizzungen 5 zum Aufspreizen des Einschlagankers 2, so dass nicht der Einschlaganker 2 tiefer in das Bohrloch sondern das Spreizelement 11 zwischen die Spreizzungen 5 eingetrieben wird.

Erfindungsgemäß weist der Einschlaganker 2 ein Klemmelement 14 auf, das seitlich vom Grundkörper 3 absteht. Im Ausführungsbeispiel ist das Klemmelement 14 ein Tropfen eines Klebstoffs, der im klebenden Zustand auf den Grundkörper 3 aufgebracht ist und sich durch Abbinden klebend, d.h. durch einen Stoffschluss mit dem Grundkörper 3 aus Metall verbindet. Allgemein ist das Klemmelement 14 ein nicht metallisches, insbesondere aus einem Kunststoff bestehendes und elastisch und/oder plastisch verformbares Element, das stoffschlüssig mit dem Grundkörper 3 verbunden ist und seitlich vom Grundkörper 3 absteht. Speziell handelt es sich bei dem Klebstoff um einen Hotmelt Jowat-Toptherm 256.00, also einem Schmelzkleber mit kurzer Abbindezeit. Im Ausführungsbeispiel ist das Klemmelement 14 ungefähr in einer Längsmitte und an einer Stelle eines Umfangs des Einschlagankers 2 angeordnet; es ist allerdings auch eine Anordnung des Klemmelements 14 an anderer Stelle des Spreizdübels möglich. Auch ist eine andere Form des Klemmelements 14 möglich und/oder es können mehrere Klemmelemente 14 gleich- oder ungleichmäßig über eine Länge und/oder einen Umfang des Einschlagankers 2 verteilt vorgesehen sein (nicht dargestellt). Es genügt allerdings ein beispielsweise tropfenförmiges Klemmelement 14 wie in der Zeichnung dargestellt.

Befindet sich der nicht aufgespreizte Einschlaganker 2 in einem Bohrloch, drückt das Klemmelement 14 gegen eine Lochwandung des Bohrlochs und drückt auf einer gegenüberliegenden Seite den Einschlaganker 2 gegen die Lochwandung derart, dass der Einschlaganker 2 klemmend im Bohrloch gehalten ist. In einem Bohrloch mit großem Übermaß gegenüber dem Nenndurchmesser, also beipielsweise einem Bohrloch mit Durchmesser 8,45 mm bei einem Nenndurchmesser von 8 mm,, wie es in der Zeichnung mit einer Geraden D angedeutet ist, verformt sich das Klemmelement 14 nur wenig. Trotzdem genügt eine Kraft, mit der das Klemmelement 14 gegen die Lochwand und auf einer gegenüberliegenden Seite den Einschlaganker 2 gegen die Lochwand drückt, um dem Einschlaganker 2, solange er noch nicht aufgespreizt ist, gegen eine Schwerkraft im Bohrloch zu halten, auch dann, wenn das Bohrloch nach oben gerichtet ist.

In einem kleineren Bohrloch mit geringerem Übermaß, das in der Zeichnung mit einer Geraden d angedeutet ist, ist das Klemmelement 14 stärker verformt und die Kraft, mit der es gegen die Lochwand und den Einschlaganker 2 auf einer gegenüberliegenden Seite gegen die Lochwand drückt, dementsprechend größer. Beim Einbringen des Einschlagankers 2 in ein solches, kleineres Bohrloch kann ein Teil des Klemmelements 14 abgeschert oder in die Länge gezogen werden. Trotzdem genügt die Kraft, mit der das Klemmelement 14 gegen die Lochwand und den Einschlaganker 2 auf der gegenüberliegenden Seite gegen die Lochwand drückt, um den Einschlaganker 2 gegen die Schwerkraft im Bohrloch zu halten, solange der Einschlaganker 2 noch nicht aufgespreizt ist.

### Bezugszahlenliste

- D: Durchmesser eines Bohrlochs mit großem Übermaß
- d: Durchmesser eines Bohrlochs mit geringem Übermaß
- 1: Anker
- 2: Einschlaganker
- 3: Grundkörper
- 4: Längsschlitz
- 5: Spreizzunge
- 6: vorderes Ende
- 7: Axialloch
- 8: Innengewinde
- 9: hinteres Ende
- 10: Einschlagtiefenbegrenzung
- 11: Spreizelement
- 12: z ylindrischer Abschnitt
- 13: konischer Abschnitt
- 14: Klemmelement

## Patentansprüche

1. Anker (1) mit einem Grundkörper (3) aus Metall, zur Verankerung in einem Bohrloch, **dadurch gekennzeichnet, dass** der Anker (1) mindestens ein seitlich abstehendes, verformbares Klemmelement (14) aufweist, das stoffschlüssig mit dem Grundkörper (3) verbunden ist.

2. Anker nach Anspruch 1, **dadurch gekennzeichnet, dass** das Klemmelement (14) nicht metallisch ist.

3. Anker nach Anspruch 1 oder 2, **dadurch gekennzeichnet, dass** das Klemmelement (14) in Längsrichtung im Wesentlichen mittig am Anker (1) angeordnet ist.

4. Anker nach einem der Ansprüche 1 bis 3, **dadurch gekennzeichnet, dass** der Anker (1) genau ein Klemmelement (14) aufweist.

5. Anker nach einem der Ansprüche 1 bis 4, **dadurch gekennzeichnet, dass** das Klemmelement (14) mit dem Grundkörper (3) verklebt ist.

6. Anker nach einem der vorhergehenden Ansprüche, **dadurch gekennzeichnet, dass** das Klemmelement (14) aus Klebstoff besteht.

7. Anker nach Anspruch 6, **dadurch gekennzeichnet, dass** der Klebstoff ein Schmelzklebstoff ist.

8. Anker nach einem der vorhergehenden Ansprüche, **dadurch gekennzeichnet, dass** der Anker (1) eine Einschlagtiefenbegrenzung (10) aufweist.

9. Anker nach einem der vorhergehenden Ansprüche, **dadurch gekennzeichnet, dass** der Anker (1) ein Gewinde (8) zur Befestigung eines Gegenstands am Anker (1) aufweist.

10. Befestigungsanordnung mit einem Anker (1) mit einem Grundkörper (3) aus Metall, zur Verankerung in einem Bohrloch, insbesondere mit einem Anker (1) nach einem der Ansprüche 1 bis 9, sowie mit einem Ankergrund mit einem Bohrloch, wobei der Anker (1) einen Verankerungsabschnitt aufweist, der einen Durchmesser aufweist, der kleiner als der Durchmesser des Bohrlochs (d) ist, **dadurch gekennzeichnet, dass** der Anker (1) mindestens ein seitlich abstehendes, verformbares Klemmelement (14) aufweist, das im Bohrloch gegen eine Lochwand des Bohrlochs drückt und das stoffschlüssig mit dem Grundkörper (3) verbunden ist.

## Claims

1. Anchor (1) having a main body (3) made of metal, for anchoring in a drilled hole, **characterised in that** the anchor (1) has at least one laterally projecting, deformable clamping element (14) which is joined to the main body (3) by means of substance-to-substance bonding.

2. Anchor according to claim 1, **characterised in that** the clamping element (14) is non-metallic.

3. Anchor according to claim 1 or 2, **characterised in that** the clamping element (14) is arranged on the anchor (1) substantially centrally in the longitudinal direction.

4. Anchor according to any one of claims 1 to 3, **characterised in that** the anchor (1) has just one clamping element (14).

5. Anchor according to any one of claims 1 to 4, **characterised in that** the clamping element (14) is adhesively bonded to the main body (3).

6. Anchor according to any one of the preceding claims, **characterised in that** the clamping element (14) consists of adhesive.

7. Anchor according to claim 6, **characterised in that** the adhesive is a hot-melt adhesive.

8. Anchor according to any one of the preceding claims, **characterised in that** the anchor (1) has a hammer-in depth limiter (10).

9. Anchor according to any one of the preceding claims, **characterised in that** the anchor (1) has a thread (8) for fixing an article to the anchor (1).

10. Fixing arrangement having an anchor (1) with a main body (3) made of metal, for anchoring in a drilled hole, especially having an anchor (1) according to any one of claims 1 to 9, and having an anchoring substrate with a drilled hole, the anchor (1) having an anchoring portion of a diameter that is smaller than the diameter of the drilled hole (d), **characterised in that** the anchor (1) has at least one laterally projecting, deformable clamping element (14) which, in the drilled hole, presses against a wall of the drilled hole and which is joined to the main body (3) by means of substance-to-substance bonding.

## Revendications

1. Pièce d'ancrage (1) dotée d'un corps de base (3) en métal, en vue de l'ancrage dans un trou foré, **caractérisée par le fait que** ladite pièce d'ancrage (1) comporte au moins un élément de serrage (14) déformable, faisant saillie latéralement et relié matériellement au corps de base (3).

2. Pièce d'ancrage selon la revendication 1, **caractérisée par le fait que** l'élément de serrage (14) n'est pas métallique.

3. Pièce d'ancrage selon la revendication 1 ou 2, **caractérisée par le fait que** l'élément de serrage (14) occupe pour l'essentiel, dans la direction longitudinale, un emplacement central sur ladite pièce d'ancrage (1).

4. Pièce d'ancrage selon l'une des revendications 1 à 3, **caractérisée par le fait que** ladite pièce d'ancrage (1) est pourvue d'exactement un élément de serrage (14).

5. Pièce d'ancrage selon l'une des revendications 1 à 4, **caractérisée par le fait que** l'élément de serrage (14) est collé au corps de base (3).

6. Pièce d'ancrage selon l'une des revendications précédentes, **caractérisée par le fait que** l'élément de serrage (14) est constitué d'un adhésif.

7. Pièce d'ancrage selon la revendication 6, **caractérisée par le fait que** l'adhésif est un adhésif thermofusible.

8. Pièce d'ancrage selon l'une des revendications précédentes, **caractérisée par le fait que** ladite pièce d'ancrage (1) est pourvue d'une limitation (10) de profondeur d'enfoncement par percussion.

9. Pièce d'ancrage selon l'une des revendications précédentes, **caractérisée par le fait que** la pièce d'ancrage (1) est pourvue d'un filetage (8) dévolu à la fixation d'un objet à ladite pièce d'ancrage (1).

10. Dispositif de fixation comprenant une pièce d'ancrage (1) dotée d'un corps de base (3) en métal, en vue de l'ancrage dans un trou foré, en particulier une pièce d'ancrage (1) conforme à l'une des revendications 1 à 9, ainsi qu'une assise d'ancrage percée d'un trou foré, ladite pièce d'ancrage (1) étant munie d'une zone d'ancrage qui présente un diamètre inférieur au diamètre (d) dudit trou foré, **caractérisé par le fait que** la pièce d'ancrage (1) comporte au moins un élément de serrage (14) déformable, faisant saillie latéralement, qui exerce une pression contre une paroi du trou foré, dans ledit trou foré, et est relié matériellement au corps de base (3).
